# EUROPEAN PATENT APPLICATION

(11) **EP 4 737 175 A1**
(43) Date of publication of application: **06.05.2026**
(21) Application number: 25210657.0
(22) Date of filing: 23.10.2025
(51) Int. Cl.: B60K 11/02, B60K 6/20

(54) **THERMAL MANAGEMENT FOR HYBRID MINING TRUCKS**

(30) Priority: 01.11.2024 US 202418935003
(71) Applicant: Cummins, Inc., Columbus, Indiana 47201 (US)
(72) Inventor: Richards, Kieran, West Haddon, NN6 7ET (GB); Trudell, Tanner, Columbus, 47201 (US); Sopp, Daniel, West Haddon, NN6 7DZ (GB)
(74) Representative: Cleveland Scott York

(57) **Abstract**

A mining truck can include a resistor grid, an electronics unit, and a thermal management system positioned on a deck of the mining truck. The thermal management system can include an air transfer zone arranged between the resistor grid and the electronics unit. The air transfer zone can be configured to receive exhaust air from the resistor grid. The thermal management system can further include one or more heat exchangers positioned above the resistor grid. The one or more heat exchangers can be configured to receive a cooling fluid for cooling one or more electronic components of the mining truck.

## Description

### TECHNICAL FIELD OF THE PRESENT DISCLOSURE

The present disclosure relates to architectures, or component arrangements, of hybrid mining trucks. In particular, the present disclosure relates to the arrangement of vehicle components associated with a thermal management system of a hybrid mining truck.

### BACKGROUND OF THE PRESENT DISCLOSURE

Environmental and efficiency considerations have resulted in the electrification of vehicles across industries and purposes. While electric and hybrid passenger and cargo vehicles are becoming more commonplace, electrification and/or hybridization of large equipment vehicles poses its own set of challenges. For example, large equipment vehicles, such as mining trucks, cranes, bulldozers, etc., may require a workload and/or have a sheer size component that make implementation of alternative powertrains more difficult. Additionally, the components required for hybridization and/or electrification of such vehicles may be difficult to arrange due to the space available relative to the respective vehicle for mounting such components.

### SUMMARY OF THE DISCLOSURE

A mining truck can include a resistor grid, an electronics unit, and a thermal management system. The resistor grid, electronics unit, and thermal management system can be positioned on a deck of the mining truck. The thermal management system can include an air transfer zone. The air transfer zone can be arranged between the resistor grid and the electronics unit. The air transfer zone can be configured to receive exhaust air from the resistor grid. The thermal management system can further include one or more heat exchangers. The one or more heat exchangers can be positioned above the resistor grid. The one or more heat exchangers can be configured to receive a cooling fluid. The cooling fluid can be for cooling one or more electronic components of the mining truck.

In a first aspect of the disclosure, a mining truck is provided. The mining truck includes a chassis extending along a longitudinal length of the mining truck. The chassis has a front end portion and a rear end portion. The mining truck further includes a deck supported by the front end portion of the chassis, a resistor grid supported by the deck, an electronics unit supported by the deck and spaced apart from the resistor grid, and an air transfer zone arranged between the resistor grid and the electronics unit. The air transfer zone is configured to receive exhaust air from the resistor grid.

In another aspect of the disclosure, a mining truck is provided. The mining truck includes a chassis extending along a longitudinal length of the mining truck, a deck supported by the chassis, a resistor grid supported by the deck, and one or more heat exchangers positioned above the resistor grid. The one or more heat exchangers are configured to receive a cooling fluid for cooling one or more electronic components of the mining truck.

In various aspects of the disclosure, the electronics unit may include a battery.

In various aspects of the disclosure, the mining truck may further include an insulation layer disposed between the air transfer zone and the electronics unit.

In various aspects of the disclosure, the resistor grid is configured to move the exhaust air in a first direction. The air transfer zone may form a flow path in a second direction that is substantially perpendicular to the first direction. The resistor grid may include one or more fins oriented to direct the exhaust air toward the second direction. The air transfer zone may be configured to vent the exhaust air in the second direction. The deck may have a first side and a second side opposite the first side. The second side may include an operator cab of the mining truck. The first side may include the air transfer zone. The air transfer zone may be configured to vent the exhaust air away from the mining truck from the first side. The second direction may extend from the first side to an ambient area adjacent the first side. The mining truck may further include a mirror coupled to the first side of the mining truck and a line-of-sight defined between the mirror and the operator cab. Neither of the resistor grid nor the electronics unit may intersect the line-of-sight defined between the mirror and the operator cab.

In various aspects of the disclosure, the electronics unit may include one or more DC/DC converters.

In various aspects of the disclosure, the resistor grid may include a top-side access panel.

In various aspects of the disclosure, the mining truck further includes one or more condenser tubes positioned above the resistor grid.

In various aspects of the disclosure, the mining truck may further include a front support member positioned between the resistor grid and the air transfer zone. The front support member may include an upper portion and a lower portion. The upper portion may be removably attached to the lower portion.

In various aspects of the disclosure, the mining truck may further include an electronics unit spaced apart from the resistor grid and an air transfer zone arranged between the resistor grid and the electronics unit. The one or more heat exchangers may be positioned above the air transfer zone, such that the air transfer zone is enclosed by the resistor grid, the electronics unit, the deck, and a base support member of the one or more heat exchangers. The mining truck may further include an insulation layer disposed between the air transfer zone and the one or more heat exchangers. The one or more heat exchangers may be positioned above the electronics unit.

In various aspects of the disclosure, the one or more electronic components of the mining truck may include a battery of the mining truck and an electronics unit positioned on the deck. The one or more heat exchangers may include a first heat exchanger configured to cool the battery of the mining truck and a second heat exchanger configured to cool the electronics unit. The mining truck may further include a radiator configured to cool the electronics unit. The one or more heat exchangers may be configured to cool the battery of the mining truck.

While multiple embodiments are disclosed, still other embodiments of the present disclosure will become apparent to those skilled in the art from the following detailed description, which shows and describes illustrative embodiments of the disclosure. Accordingly, the drawings and detailed description are to be regarded as illustrative in nature and not restrictive.

### BRIEF DESCRIPTION OF THE DRAWINGS

The detailed description of the drawings particularly refers to the accompanying figures in which:
FIG. 1 is a schematic top-down illustration of an architecture arrangement of components of a mining truck;
FIG. 2 illustrates a top-down schematic illustration of another architecture arrangement of components of a mining truck;
FIG. 3 illustrates a top-down schematic illustration of an arrangement of zones on a deck of a mining truck;
FIG. **4A** illustrates a side view of a thermal management system of a mining truck, in accordance with embodiments of the present disclosure;
FIG. **4B** illustrates a plan view of the thermal management system of FIG. 4A, in accordance with embodiments of the present disclosure;
FIG. **5A** illustrates a side view of a thermal management system of a mining truck, in accordance with embodiments of the present disclosure;
FIG. **5B** illustrates a plan view of the thermal management system of FIG. 5A, in accordance with embodiments of the present disclosure;
FIG. 6 illustrates a side view schematic illustration of an architecture arrangement of a mining truck including an on-board trolley system; and
FIG. 7 is an illustration of a mining truck including an on-board trolley system.

Although the drawings represent embodiments of various features and components according to the present disclosure, the exemplification set out herein illustrates an embodiment, and such an exemplification is not to be construed as limiting the scope of the disclosure in any manner.

### DETAILED DESCRIPTION OF THE DRAWINGS

The present disclosure relates to architectures, or component arrangements, of hybrid mining trucks; more particular aspects relate to architectures associated with a thermal management system of a hybrid mining truck.

As noted above, in view of environmental and efficiency considerations, there are efforts to electrify and/or hybridize large equipment vehicles (e.g., mining trucks, cranes, bulldozers). The size and workload of such vehicles can present a variety of challenges to alternative powertrain configurations. In some instances, the work environment of such vehicles can include elevated temperatures, dusty air, and rugged terrain which can present additional challenges to thermal management and operating efficiency of such vehicles. Additionally, some design configurations, such as those including retrofitting an internal-combustion-powered mining truck for hybrid or electric-powered operation, can have a limited available space for installing new components.

To address these and other challenges, embodiments of the present disclosure include an integrated thermal management system. In some embodiments, the thermal management system can, within a compact space, provide efficient and effective heat dissipation for systems of a mining truck. For example, embodiments of the present disclosure include a thermal management system that is structurally integrated with a resistor grid and an electronics unit of a mining truck. This configuration permits simultaneous cooling of the resistor grid and the electronics unit within a compact space on a deck of the mining truck. In some embodiments, the thermal management system can include a heat exchanger (e.g., a heat exchanger core) arranged in a tiered configuration with an air transfer zone. This configuration can facilitate optimal heat transfer by the heat exchanger by permitting a substantially unobstructed flow of air to reach the heat exchanger.

For the purposes of promoting an understanding of the principles of the present disclosure, reference will now be made to the embodiments illustrated in the drawings, which are described herein. The embodiments disclosed herein are not intended to be exhaustive or to limit the invention to the precise form disclosed. Rather, the embodiments are chosen and described so that others skilled in the art may utilize their teachings. Therefore, no limitation of the scope of the claimed invention is thereby intended. The present invention includes any alterations and further modifications of the illustrated devices and described methods and further applications of principles in the invention which would normally occur to one skilled in the art to which the invention relates.

The terms "couples," "coupled," "coupler," and variations thereof are used to include both arrangements wherein the two or more components are in direct physical contact and arrangements wherein the two or more components are not in direct contact with each other (e.g., the components are "coupled" via at least a third component), but yet still cooperate or interact with each other.

In some instances throughout this disclosure and in the claims, numeric terminology, such as first, second, third, fourth, etc., is used in reference to various components of features. Such use is not intended to denote an ordering of the components or features. Rather, numeric terminology is used to assist the reader in identifying the components or features being referenced and should not be narrowly interpreted as providing a specific order of components or features.

While the disclosure herein is provided in terms of a "mining truck", it is understood that the features described herein may apply to other vehicles, including heavy equipment such as cranes, bulldozers, excavators, etc., locomotives, and other appropriate vehicles.

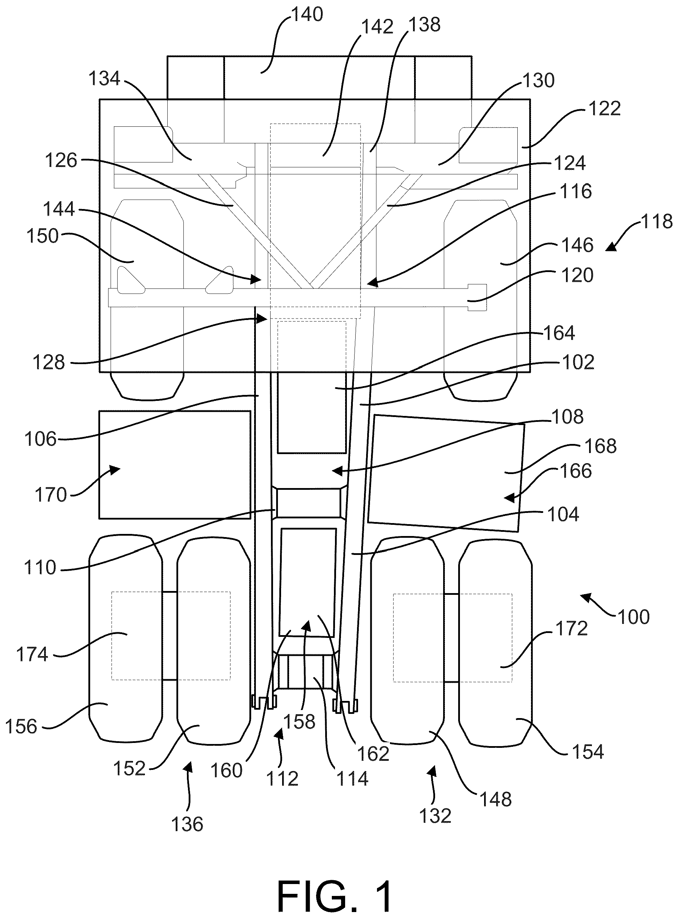

A schematic architecture of an exemplary mining truck **100** is illustrated in FIG. **1****.** As shown, mining truck **100** may generally be built on and/or around chassis **102.** Chassis **102** may include a first frame member **104** and a second frame member **106** extending longitudinally from a first end portion of the chassis, including a first end of the chassis, to a second end portion of the chassis, including a second end of the chassis, to at least partially define a length of mining truck **100.** First frame member **104** and second frame member **106** may be spaced apart to form a space **108** therebetween, and a central crossbeam **110** may extend from first frame member **104** to second frame member **106** across space **108,** to generally define a rear chassis region **112.** A rear crossbeam **114** may extens from first frame member **104** to second frame member **106** across space **108** at the rear of chassis **102,** and a horse collar **116** may connect first frame member **104** and second frame member **106** within a forward region **118** of chassis **102.**

A third frame member **120** may extend across the top of horse collar **116** and beyond the diameter of horse collar **116** to form a support for a deck **122** (FIG. **1****)** as described further herein. A first supplemental frame member **124** and a second supplemental frame member **126** may each extend diagonally from a central portion **128** of third frame member **120** above horse collar **116** in opposite directions so that first supplemental frame member **124** may connect to a first support plate **130,** and secondn supplemental frame member **126** may connect to a second support plate **134.** First support plate **130** may connect to first frame member **104** on a first side **132** of chassis **102,** and second support plate **134** may also connect to second frame member **106** on a second side **136** of chassis **102.**

A forward crossbeam **138** may extend from first frame member **104** to second frame member **106** in general alignment with first support plate **130** and second support plate **134.** A support extension **140** may extend forward of forward crossbeam **138.** An engine **142** may be positioned within an opening **144** defined by horse collar **116.** A traction alternator and/or gearbox may be mounted rearward of engine **142** within area **164.**

Referring again to FIG. **1****,** wheels **146, 148, 150,** and **152** may be mounted to chassis **102** via respective axles (not shown). For example, as shown, first wheel **146** may be mounted at a forward position in forward region **118** on first side **132** of chassis **102.** Second wheel **148** may be mounted at a rearward position in rear chassis region **112** on first side **132** of chassis **102.** Third wheel **150** may be mounted at a forward position in forward region **118** on second side **136** of chassis **102.** Fourth wheel **152** may be mounted at a rearward position in rear chassis region **112** on second side **136** of chassis **102.** In some embodiments, mining truck **100** may include a fifth wheel **154** mounted adjacent to second wheel **148** at a rearward position in rear chassis region **112** on first side **132** of chassis **102.** Some embodiments may additionally include a sixth wheel **156** mounted adjacent to fourth wheel **152** at a rearward position in rear chassis region **112** on second side **136** of chassis **102.** First wheel **146** and third wheel **150** may be mounted at a position generally corresponding to third frame member **120.**

A rear region space **158** defined between first frame member **104** and second frame member **106** within rear chassis region **112,** and at least partially defined between second wheel **148** and fourth wheel **152,** may be sized and shaped to receive a vehicle subsystem **160.** For example, vehicle subsystem **160** may include an aftertreatment system **162.** In other embodiments, vehicle subsystem **160** may include a battery module, a fuel tank, a powertrain support subsystem, or any other vehicle subsystems necessary or otherwise desired for operation of mining truck **100.** As described herein, an exhaust muffler and an exhaust silencer may be similar or the same components intended to quiet an exhaust by some value, e.g., a decibel value. In other embodiments, rear region space **158** may be free of any vehicle subsystems or components.

First wheel **146** and second wheel **148** may define a space, or first side saddle **166** therebetween. In some embodiments, as illustrated in FIG. **1****,** a fuel tank **168** may be mounted to chassis **102** within first side saddle **166.** Fuel tank **168** may contain, for example, diesel fuel, methanol, ammonia, or another suitable fuel for operation of mining truck **100.** Likewise, third wheel **150** and fourth wheel **152** may define a space, or second side saddle **170.**

A first wheel motor **172** may be associated with second wheel **148** and, in embodiments including a fifth wheel, fifth wheel **154.** A second wheel motor **174** may be associated with fourth wheel **152** and, in embodiments including a sixth wheel, sixth wheel **156.** In some embodiments including a fifth and/or sixth wheel, each of second wheel **148,** fourth wheel **152,** fifth wheel **154,** and sixth wheel **156** may have a separate wheel motor. In other embodiments, all of wheels **146, 148, 150, 152, 154,** and **156** or wheels **146, 148, 150, 152,** or any combination thereof, may be associated with a wheel motor, whether such wheel motor is designated to a single wheel or such wheel motor is shared between two or more wheels.

Still referring to FIG. **1****,** deck **122** may be supported by chassis **102,** and, for example, by third frame member **120,** first support plate **130,** and second support plate **134.** In other words, deck **122** may be supported by the first end portion of chassis **102,** wherein the first end portion of chassis **102** includes a first end of chassis **102.** Deck **122** is configured to support a cab to facilitate operation of mining truck **100** and various vehicle subsystems, including hybrid powertrain subsystems and components as discussed further herein.

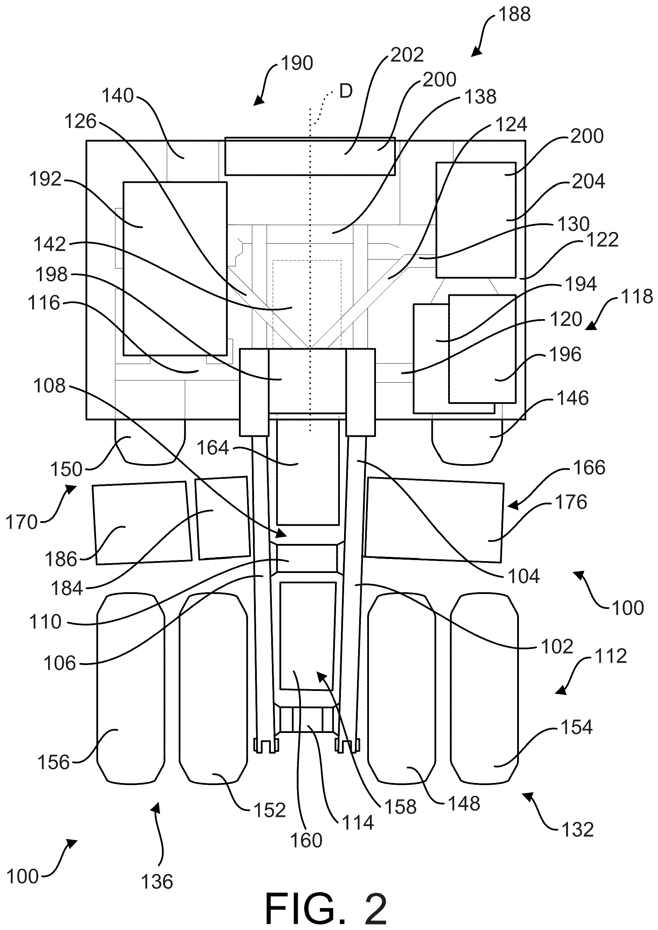

Now referring to FIG. **2****,** a battery pack module **176** may be mounted to a first side **132** of chassis **102** within first side saddle **166,** rather than fuel tank **168** as described above in relation to FIG. **1****.** Battery pack module **176** is configured to store power for use in operation of mining truck **100.** Battery pack module **176** is mounted within first side saddle **166** at a position which mitigates potential contact of any one of wheels **146, 148, 150, 152, 154** (when present) and/or **156** (when present).

Battery pack module **176** may include a plurality of battery pack layers in a vertical arrangement, where each battery pack layer of the plurality of battery pack layers includes one or more battery packs. This vertical arrangement of battery packs as positioned in a side saddle may take advantage of a height of mining truck **100** to include as many battery packs as necessary for efficient operation of mining truck **100** in a hybrid operation mode. Mounting of battery pack module **176** within first side saddle **166** may facilitate an even balance of mining truck **100** when one or more tanks are also mounted to chassis **102** within second side saddle **170** as discussed further herein. This placement may also maximize space for battery positioning while allowing the batteries to be put in a single, unified space rather than distributed in several places over the architecture of mining truck **100.** While these benefits are acknowledged, it is also within the scope of this disclosure that battery pack module **176** and/or a plurality of battery packs may be alternately positioned, whether in a single, unified space (i.e., on deck **122,** within rear region space **158,** or another placement), or in a plurality of places throughout the architecture of mining truck **100.**

Still referring to FIG. **2****,** a hydraulic liquid tank **184** may be mounted to second side **136** of chassis **102** within second side saddle **170.** Hydraulic liquid tank **184** may serve as a reservoir for containing excess hydraulic fluid for operation of mining truck **100** and/or serve to hold a supply of hydraulic fluid for operation of mining truck **100.** A second liquid tank **186** may be mounted to chassis **102** within second side saddle **170.** In some embodiments, second liquid tank **186** may be a fuel tank, such as fuel tank **168** described above.

As illustrated, hydraulic liquid tank **184** may be mounted to chassis **102** at an interior position of second side saddle **170,** while second liquid tank **186** can be mounted to chassis **102** at an exterior position of second side saddle **170,** so that hydraulic liquid tank **184** is substantially in-between the chassis and the second liquid tank **186.** In other embodiments, hydraulic liquid tank **184** and second liquid tank **186** may be alternately arranged. For example, in some embodiments, second liquid tank **186** may be mounted to chassis **102** at an interior position of second side saddle **170,** while hydraulic liquid tank **184** may be mounted to chassis **102 at** an exterior position of second side saddle **170.**

In yet other embodiments, hydraulic liquid tank **184** and second liquid tank **186** may both be arranged at a generally interior position of second side saddle **170** so that one of hydraulic liquid tank **184** and second liquid tank **186** is positioned at a forward position near third wheel **150,** and the other of the hydraulic liquid tank **184** and second liquid tank **186** is positioned at a rearward position near fourth wheel **152.** In some embodiments, a third liquid tank, for example, a second fuel tank, may be mounted to the chassis **102** within the second side saddle **170.** In other embodiments, the second fuel tank may be mounted to chassis **102** within the first side saddle **166** in place of or in tandem with battery pack module **176.**

Rear region space **158** defined by chassis **102** between second wheel **148** and fourth wheel **152** may include a vehicle subsystem **160** mounted therein, such as an aftertreatment system, a heating system for a bed of mining truck **100,** and/or an exhaust muffler. In some embodiments, rear region space **158** can remain empty of any vehicle subsystems. It is within the scope of the disclosure that other subsystems beyond those listed explicitly herein can be mounted within rear region space **158.**

As discussed above, deck **122** is supported at a forward position by chassis **102.** Deck **122** includes a first region **188** associated with a first side of deck **122** corresponding with first side **132** of chassis **102** and a second region **190** associated with a second side of deck **122** corresponding with second side **136** of chassis **102.** First region **188** and second region **190** are illustrated by dividing line **"D".** An operator cab **192** may be arranged within second region **190** of deck **122.** Operator cab **192** is configured to house an operator during operation of mining truck **100,** along with controls necessary or desired for said operation of mining truck **100.**

A resistor grid **194** may be arranged within first region **188** of deck **122** and may be positioned at a generally rearward position of first region **188** of deck **122.** An inverter cabinet **198** may be positioned at least partially in first region **188** of deck **122** and at least partially in second region **190** of deck **122.** For example, inverter cabinet **198** may be equally positioned in first region **188** and second region **190** or, in some embodiments, be positioned so that a majority of inverter cabinet **198** is in first region **188.** In other embodiments, inverter cabinet **198** may be positioned so that a majority of inverter cabinet **198** is in second region **190.** As illustrated, inverter cabinet **198** may be positioned at a rear portion of deck **122.** The positioning of inverter cabinet **198** in this manner can provide an open area for positioning of additional mining truck components, for example, as described further herein.

Mining truck **100** may further include a thermal management system **200**. Thermal management system **200** may include a radiator **202** and a DC/DC-battery thermal manager **204**. In some embodiments, radiator **202** and DC/DC-battery thermal manager **204** may be integrated, i.e., one thermal management component may serve as both radiator **202** and DC/DC-battery thermal manager **204**. In other embodiments, radiator **202** may service both engine **142** and DC/DC system **196,** while DC/DC-battery thermal manager **204** only services battery pack module **176.**

As illustrated, radiator **202** may be mounted to a front of mining truck **100,** or, in other words, at a full forward position relative to deck **122.** For example, radiator may be, at least in part, mounted to a forward edge of deck **122** so that radiator **202** extends downward from deck **122.** In other embodiments, radiator **202** may be mounted to a front of mining truck **100** below deck **122.** In yet other embodiments, radiator **202** may be mounted at another position of mining truck **100.**

DC/DC-battery thermal manager **204** may be positioned on deck **122** within first region **188** at a forward position of resistor grid **194** and/or DC/DC system **196.** DC/DC-battery thermal manager **204** may be configured to be fluidly coupled to battery pack module **176** to provide coolant or refrigerated liquid to battery pack module **176,** and/or, in some embodiments, may be fluidly coupled to DC/DC system **196** to provide thermal management services to DC/DC system **196.**

DC/DC system **196** may be positioned forward of DC/DC-battery thermal manager **204,** so that DC/DC-battery thermal manager **204** is positioned generally between resistor grid **194** and DC/DC system **196.** The positioning of the components herein provides access to service panels on top of resistor grid **194,** while further accounting for positioning of DC/DC-battery thermal manager **204** in an efficient position relative to DC/DC system **196** and battery pack module **176** mounted within first side saddle **166.** The arrangement of components as described in relation to FIG. **2** can also mitigate interference with line-of-sight to side mirrors (not shown) of mining truck **100** from operator cab **192** positioned within second region **190** of deck **122.**

The arrangement of components on the deck as described herein are exemplary in nature and can be altered within the scope of the disclosure. For example, in some embodiments, first region **188** and second region **190** can be mirrored or switched. In other embodiments, components can be moved relative to one another and/or relative to deck **122.** Positioning of the components of the deck as described herein can mitigate damage and/or poor performance from dust, dirt, mud, and/or other environmental considerations. Furthermore, placement of such components on deck **122** in combination with mounting of battery pack module **176,** hydraulic liquid tank **184,** and second liquid tank **186** in respective side saddles **166, 170** facilitates weight balance of mining truck **100.** However, other placements are within the scope of the disclosure.

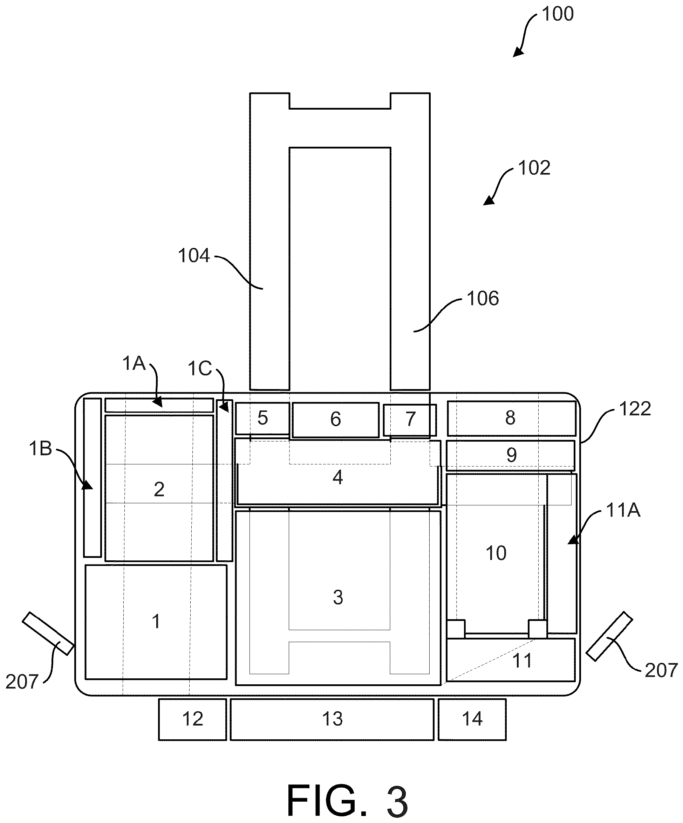

Now referring to FIG. 3, in reference to FIGS. **1-2** above, the positioning of components upon deck **122** of mining truck **100** are further provided in reference to possible requirements of each individual component. In other words, FIG. **3** provides an arrangement of components on deck **122** along with reference to zoned areas for component operation during operation of mining truck **100.**

Zone **2** can include a resistor grid, such as resistor grid **194.** Zone **2** may be positioned within first region **188** of deck **122** at a generally rearward portion of deck **122** within first region **188.** Space around zone **2** may be defined, for example, within zones **1,** and **1A** to facilitate grid exhaust of resistor grid **194** and zones **1B** and **1C** to facilitate air intake for resistor grid **194.** In other embodiments described above, wherein DC/DC system **196** and/or DC/DC-battery thermal manager **204** is positioned forward of resistor grid **194,** a space may be defined between resistor grid **194** and the other of DC/DC system **196** or DC/DC-battery thermal manager **204** to facilitate grid exhaust of resistor grid **194.** In other embodiments, such component may be positioned immediately forward of resistor grid **194,** with resistor grid exhaust being otherwise concentrated in zone **1A.**

Zone **4** may include an inverter cabinet, such as inverter cabinet **198,** containing main electrical systems and controls of mining truck **100.** Zone **4** may be positioned at least partially in first region **188** of deck **122** and at least partially in second region **190** of deck **122.** For example, zone **4** may be equally positioned in first region **188** and second region **190** or, in some embodiments, be positioned so that a majority of zone **4** is in first region **188.** In other embodiments, zone **4** may be positioned so that a majority of zone **4** is in second region **190.** Zone **4** may be spaced apart from zone **2** for at least zone **1C** to facilitate air intake for resistor grid **194.**

Zone **4** may be positioned at the rearmost position of deck **122.** In some embodiments, as illustrated, zone **6** may be positioned rearward of zone **4** and include blower ducting to provide main traction blower direction from above inverter cabinet **198.** Electrical wiring and blowers may further be positioned within zones **5** and **7.** Open space zone **3** may be defined in forward of zone **4** to facilitate access to inverter cabinet **198,** operator cab **192** in zone **10,** and positioning and access to other components such as a trolley pylon as described further herein. For example, zone **3** may include pylon scaffolding for connection to upper pylons in embodiments including trolley pylon systems.

Zone **10** may include operator cab **192** and may be arranged within second region **190** of deck **122.** Operator cab **192** is configured to house an operator during operation of mining truck **100,** along with controls necessary or desired for said operation of mining truck **100.** Zones **11** and **11A** around zone **10** may remain open to facilitate operator visibility during operation of mining truck **100.** For example, zone **11** may facilitate operator visibility forward of mining truck **100.** Zone **11a** may facilitate operator visibility of side mirror **207**. Zone **11a** may further facilitate operator exit from operator cab **192.** As discussed above, zone **3** may also provide access to operator cab **192.**

Zone **9** may be positioned rearward of operator cab **10** within second region **190** of deck **122** and include a brake and/or hydraulic cabinet. The brake and/or hydraulic cabinet may provide service and maintenance access to brake and/or hydraulic systems of mining truck **100.** Zone **8** may be an open space positioned rearward zone **9** to provide access to the brake and/or hydraulic cabinet. In some embodiments, emergency supplies such as fire extinguishers or other supplies may be stored within zone **8.**

Radiator **202** may be mounted to mining truck **100** forward of deck **122** in zone **13.** In some embodiments, radiator **202** may be mounted to the forward edge of deck **122** or mounted to the front of mining truck **100.** A top surface of radiator **202** may include vents and/or service access to radiator **202**. Zones **12** and **14** positioned on either side of zone **13** may serve as emergency or primary exit paths, i.e., paths for exiting mining truck **100** and/or deck **122.**

The arrangement of components on deck **122** as described herein are exemplary in nature and can be altered within the scope of the disclosure. For example, in some embodiments, first region **188** and second region **190** may be mirrored or switched. In other embodiments, components may be moved relative to one another and/or relative to deck **122.**

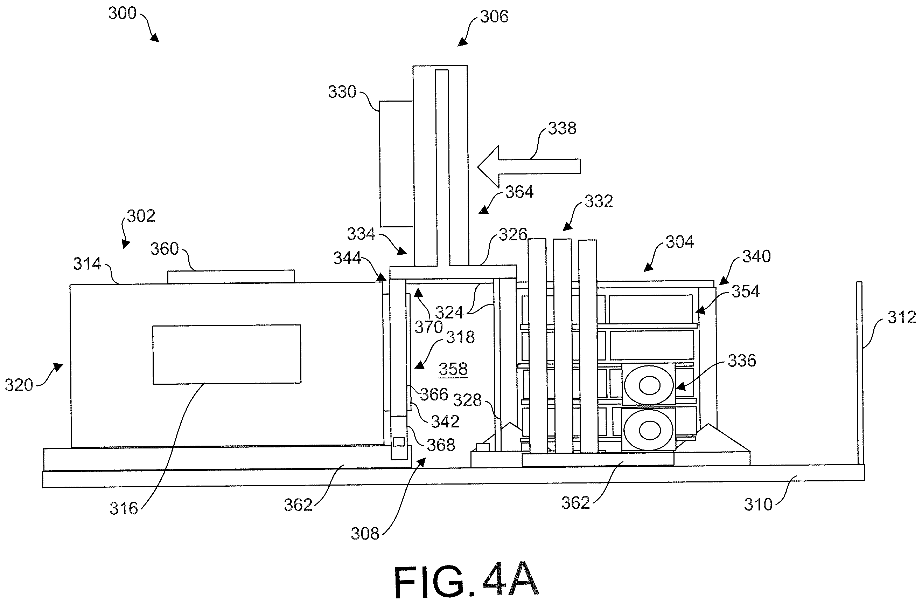

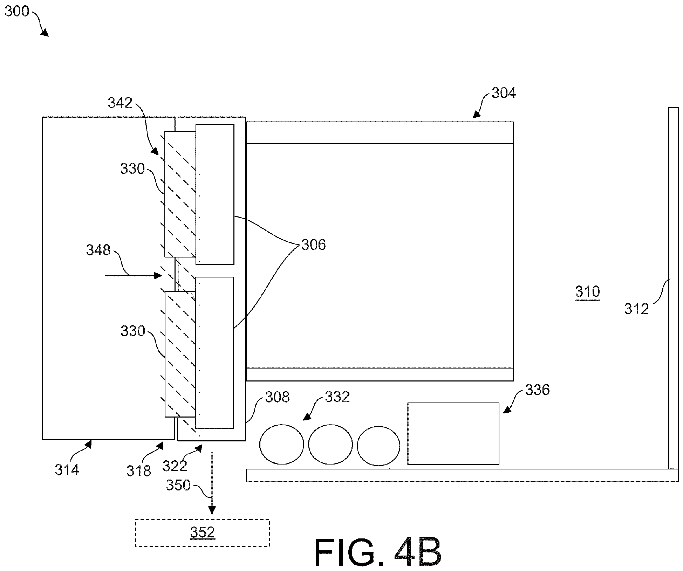

FIGS. **4A** and **4B****,** respectively, show a side view and a plan view of thermal management system **300** on deck **310** of mining truck **100,** according to embodiments of the present disclosure. Thermal management system **300** may provide efficient dissipation of heat generated by electronic components (e.g., resistor grid **302**, electronics unit **304**, and/or battery pack module **176,** FIG. **2****)** of mining truck **100.**

Turning to FIG. **4A****,** thermal management system **300** includes one or more heat exchanger systems **364** and an air transfer zone **308** arranged between resistor grid **302** and electronics unit **304**. Thermal management system **300**, resistor grid **302**, and electronics unit **304** are positioned on deck **310** of mining truck **100.** In some embodiments, thermal management system **300**, resistor grid **302**, and electronics unit **304** may be mounted to one or more skids **362** that are mounted to deck **310.**

Deck **310** may include a handrail **312** for personnel safety. Thermal management system **300** may be positioned on deck **310** in a manner that can mitigate interference with a line-of-sight to side mirrors (e.g., side mirrors **207**, FIG. **3****)** of mining truck **100** from operator cab **192.** For example, in some embodiments, heat exchangers **306** may be positioned at a distance from handrail **312** that prevents the heat exchangers **306** from obstructing visibility from the operator cab **192** to a side mirror **207** on the first side **132** of the chassis **102** of mining truck **100** (FIG. **2****).**

In some embodiments, resistor grid **302** may generate heat by receiving electrical energy from the powertrain of mining truck **100** (e.g., regenerative braking energy). Such electrical energy may be transferred to heating elements of resistor grid **302**, where it is converted to heat. Resistor grid **302** may include a fan **316** configured to dissipate the heat and cool resistor grid **302**. For example, fan **316** may configured to cool resistor grid **302** by drawing in ambient air to be exhausted from a front side **318** and a rear side **320** of resistor grid **302**. Heated air exhausted from front side **318** of resistor grid **302** may flow into air transfer zone **308**. Front side **318** of resistor grid **302** may include one or more fins (e.g., louvers) **342** oriented at an angle such that fins **342** direct exhaust air from resistor grid **302** toward the air transfer zone outlet **322,** FIG. **4B****.** The exhaust air may then be projected away from mining truck **100** when it exits air transfer zone outlet **322.**

In some embodiments of the present disclosure, thermal management system **300** may be configured to cool resistor grid **302** by drawing ambient air into resistor grid **302** from front side **318** and a rear side **320** of resistor grid **302** and exhausting heated air through one or more side panels (e.g., side panel **314)** of resistor grid **302**. In these embodiments, one or more fans (e.g., fan **316)** may be configured to draw in ambient air through rear side **320**, air transfer zone **308**, and front side **318** and exhaust air heated by resistor grid **302** from side panel **314.**

In some embodiments, air transfer zone **308** may be formed by one or more front support members **344;** one or more rear support members **328** of electronics unit **304** (e.g., a rear support wall of electronics unit **304)**; one or more base support members **326** of heat exchangers **306**; deck **310;** and/or one or more heat shield panels **324.** Accordingly, air transfer zone **308** can be enclosed, or surrounded on top, bottom, and lateral sides, by one or more base support members **326** of heat exchangers **306**; deck **310;** resistor grid **302**; and/or electronics unit **304**.

As shown in FIGS. **4A-5B****,** air transfer zone **308** may be an air transfer tunnel or conduit that directs exhaust air along a central cavity **358** and away from mining truck **100.** In these embodiments, base support member **326** supports one or more heat exchangers **306** and mounts to front support members **344** and rear support members **328,** such that heat exchangers **306** can be positioned on top of (e.g., directly above) air transfer zone **308**.

Base support member **326** (e.g., a metal plate, set of beams, and the like) may form a top wall **370** of air transfer zone **308**. In some embodiments, base support member **326** and/or heat exchangers **306** can be positioned on top of resistor grid **302** or on top of electronics unit **304**, such that air transfer zone **308** does not include top wall **370**. Front support members **344** and rear support members **328** support base support member **326.** In some embodiments, front support members **344** and rear support members **328** may include one or more stanchions (e.g., metal posts). In some embodiments, such stanchions may be assembled together (e.g., welded) to form one or more support frames. In some embodiments, front support members **344** may be configured to accommodate resistor grids having various mounting configurations.

In some embodiments, resistor grid **302** may include mounting feet (not shown) that align with front support members **344.** In some instances, different-sized resistor grids may have different quantities of mounting feet. To accommodate the different quantities of mounting feet, front support members **344** may include an upper portion **366** and a lower portion **368** that can be removably attached to one another. In this way, lower portion **368** may be interchanged such that a resistor grid having a particular quantity of mounting feet (e.g., two mounting feet) may be mounted with a corresponding lower portion **368** that aligns with the mounting feet.

In some embodiments, heat shield panels **324** may be attached to a surface of base support member **326** and a surface of rear support members **328.** Heat shield panels **324** may prevent exhaust air expelled from resistor grid **302** from transferring heat to electronics unit **304** and/or to the cooling fluid of heat exchanger systems **364.** Accordingly, heat shield panels **324** may mitigate and/or prevent the cooling of resistor grid **302** from impeding the cooling of electronics unit **304** and/or battery pack module **176** (FIG. **2****).** Heat shield panels **324** may include materials such as metal (e.g., polished and/or laminated steel or aluminum) and/or fire-resistant/heat insulating material (e.g., fiber, glass fiber, or silicone). In some embodiments, heat shield panels **324** may include a fire-resistant layer attached to a rigid sheet, such as a metal sheet. In some embodiments, heat shield panels **324** may include a plurality of rigid sheets and/or fire-resistant layers.

Electronics unit **304** may include a plurality of components **354** associated with the electrical power of mining truck **100.** For example, in some embodiments, the plurality of components **354** may include one or more DC/DC converters, a junction box, a bus bar, and corresponding wiring. Electronics unit **304** may further include an enclosing structure **340** to protect the plurality of components **354.** Enclosing structure **340** may include rear support members **328** and a plurality of additional structural components (e.g., metal sheets, additional support members, and the like). In some embodiments, electronics unit **304** may include one or more batteries.

Heat exchanger systems **364** may include one or more of the following: heat exchangers **306**; fans **330**; condenser tubes **332;** and/or flow control devices **336** (e.g., pumps and/or compressors). Heat exchanger systems **364** may further include one or more support frames **334** that support and facilitate mounting of heat exchangers **306**. Support frames **334** may further include base support member **326.** Flow control devices **336** may move cooling fluid (e.g., water or refrigerant) through heat exchangers **306**, condenser tubes **332,** and/or a set of pipes (not shown) arranged proximate battery pack module **176** and/or electronics unit **304**. This configuration permits heat generated by battery pack module **176** and/or electronics unit **304** to be transferred to the cooling fluid flowing through the set of pipes to the heat exchangers **306**.

Heat exchangers **306** may transfer heat from the cooling fluid to the ambient air. In some embodiments, thermal management system **300** may include a first heat exchanger configured to cool a battery of mining truck **100** (e.g., battery pack module **176)** and a second heat exchanger configured to cool electronics unit **304**. In some embodiments, thermal management system **300** may include one or more heat exchangers **306** configured to cool the battery of mining truck **100,** and a radiator of mining truck **100** (e.g., radiator **202**, FIG. **2****)** may be configured to cool electronics unit **304** by supplying a cooling fluid to electronics unit **304**.

According to embodiments of the present disclosure, heat exchangers **306** can be positioned in a vertical arrangement with and/or above air transfer zone **308**, electronics unit **304**, and resistor grid **302**, such that heat exchangers **306** are not blocked by structural components (e.g., panels, plates, sheets, enclosures, beams, and the like) of mining truck **100.** In this configuration, ambient air that flows along a flow path **338** from an area in front of mining truck **100** can impact heat exchangers **306** without being significantly impeded by structural components of mining truck **100.** Thus, heat exchangers **306** can be exposed to a direct (e.g., substantially unobstructed) flow of ambient air for cooling the cooling fluid flowing within heat exchangers **306**. Such exposure may facilitate an efficient transfer of heat from the cooling fluid to the ambient air. In some embodiments, heat exchangers **306** may be mounted adjacent to one another, such that each can be exposed to a direct (e.g., substantially unobstructed) flow of ambient air. In some embodiments, heat exchangers **306** may include fans **330** configured to increase the flow of air through heat exchangers **306**. In these embodiments, the fans can increase the rate of heat transfer from the cooling fluid to the ambient air by heat exchangers **306**.

By the integrated configuration of thermal management system **300**, resistor grid **302**, and electronics unit **304** discussed above, thermal management system **300** can efficiently dissipate heat from resistor grid **302** and electronics unit **304** within a compact space on deck **310.** Additionally, this configuration facilitates convenient access to resistor grid **302** and electronics unit **304** for procedures such as maintenance and/or repair. For example, both resistor grid **302** and electronics unit **304** can be conveniently accessed from deck **310,** and resistor grid **302** may include one or more top-side access panels **360** for such procedures.

FIG. **4B** shows a plan view of thermal management system **300** of FIG. **4A** on first side **132** of the chassis **102** of mining truck **100** (FIG. **2****).** As shown, heated air flows toward front side **318** of resistor grid **302** in a first direction **348.** Fins **342** of resistor grid **302** may direct the heated air into air transfer zone **308** and toward air transfer zone outlet **322,** where it flows from air transfer zone **308** in a second direction **350** that is substantially perpendicular to first direction **348.** The heated air flows from air transfer zone **308** to an area **352** adjacent first side **132** of chassis **102.**

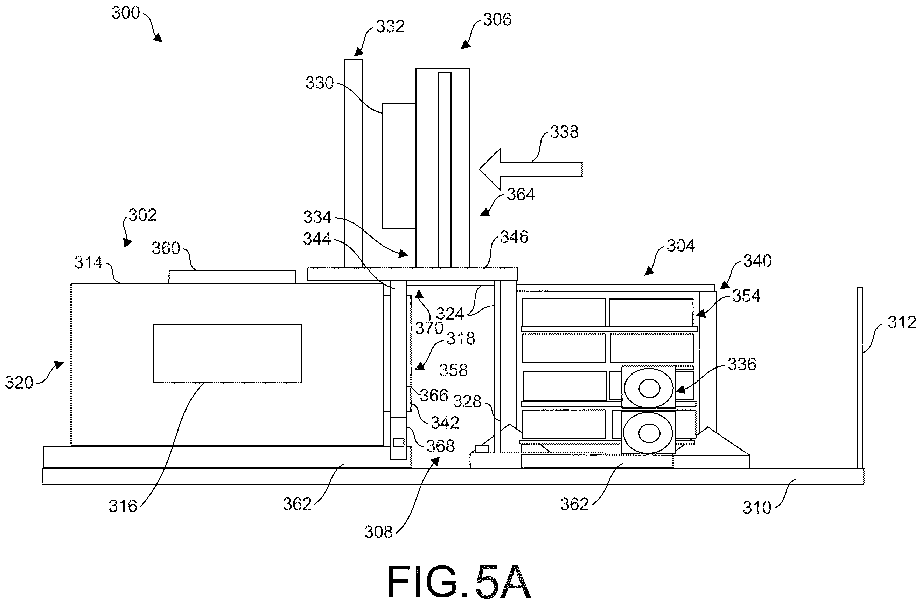

Except as described below, thermal management system **300** as illustrated in FIG. **5A** includes the same components and details described in FIG. **4A****,** with like components associated with like reference numbers. FIG. **5A** shows an embodiment of thermal management system **300** in which condenser tubes **332** are mounted in a vertical arrangement with and/or above resistor grid **302** and adjacent to heat exchangers **306**. In this configuration, thermal management system **300** can occupy a reduced amount of space on deck **310.**

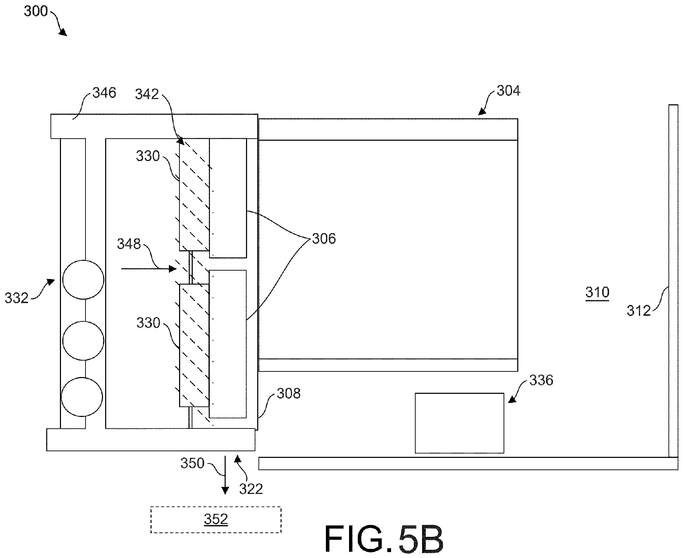

FIG. **5B** shows a plan view of the thermal management system **300** of FIG. **5A****.**

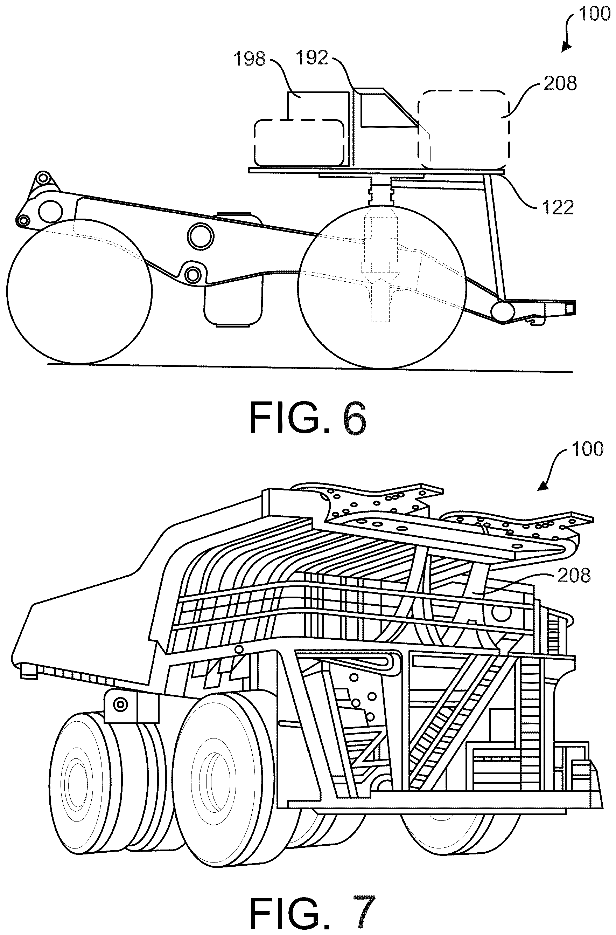

FIGS. **6-7** illustrate an embodiment of mining truck **100** including an on-board trolley system **208**, such as a pantograph. As described above, a space forward of inverter cabinet **198** can be defined to receive or can already contain an on-board trolley system **208** for connecting to an overhead trolley during operation of mining truck **100.** On-board trolley system **208,** for example, can facilitate connection of mining truck **100** to an overhead trolley to assist mining truck **100** with traversal of uphill and/or difficult trails or roads and/or when mining truck **100** is carrying heavy loads.

Various modifications and additions can be made to the exemplary embodiments discussed without departing from the scope of the disclosed subject matter. For example, while the embodiments described above refer to particular features, the scope of this disclosure also includes embodiments having different combinations of features and embodiments that do not include all of the described features. Accordingly, the scope of the disclosed subject matter is intended to embrace all such alternatives, modifications, and variations that fall within the scope of the claims, together with all equivalents thereof.

Various aspects are described in this disclosure, which include, but are not limited to, the following aspects:
(1) A mining truck including: a chassis extending along a longitudinal length of the mining truck, the chassis having a front end portion and a rear end portion; a deck supported by the front end portion of the chassis; a resistor grid supported by the deck; an electronics unit supported by the deck and spaced apart from the resistor grid; and an air transfer zone arranged between the resistor grid and the electronics unit, the air transfer zone configured to receive exhaust air from the resistor grid.
(2) The mining truck of Aspect (1), wherein the electronics unit includes a battery.
(3) The mining truck of any one of Aspects (1)-(2), further including an insulation layer disposed between the air transfer zone and the electronics unit.
(4) The mining truck of any one of Aspects (1)-(3), wherein the resistor grid is configured to move the exhaust air in a first direction, and wherein the air transfer zone forms a flow path in a second direction that is substantially perpendicular to the first direction.
(5) The mining truck of Aspect (4), wherein the resistor grid includes one or more fins oriented to direct the exhaust air toward the second direction.
(6) The mining truck of any one of Aspects (4)-(5), wherein the air transfer zone is configured to vent the exhaust air in the second direction.
(7) The mining tuck of Aspect (6), wherein the deck has a first side and a second side opposite the first side, the second side including an operator cab of the mining truck and the first side including the air transfer zone, wherein the air transfer zone is configured to vent the exhaust air away from the mining truck from the first side, and wherein the second direction extends from the first side to an ambient area adjacent the first side.
(8) The mining truck of Aspect (7), further including: a mirror coupled to the first side of the mining truck; and a line-of-sight defined between the mirror and the operator cab; wherein neither of the resistor grid nor the electronics unit intersect the line-of-sight defined between the mirror and the operator cab.
(9) The mining truck of any one of Aspects (1)-(8), wherein the electronics unit includes one or more DC/DC converters.
(10) The mining truck of any one of Aspects (1)-(9), wherein the resistor grid includes a top-side access panel.
(11) The mining truck of any one of Aspects (1)-(10), further including one or more condenser tubes positioned above the resistor grid.
(12) The mining truck of any one of Aspects (1)-(11), further including a front support member positioned between the resistor grid and the air transfer zone, and wherein the front support member includes an upper portion and a lower portion, the upper portion removably attached to the lower portion.
(13) A mining truck including: a chassis extending along a longitudinal length of the mining truck, a deck supported by the chassis; a resistor grid supported by the deck; and one or more heat exchangers positioned above the resistor grid, the one or more heat exchangers configured to receive a cooling fluid for cooling one or more electronic components of the mining truck.
(14) The mining truck of Aspect (13), further including an electronics unit spaced apart from the resistor grid and an air transfer zone arranged between the resistor grid and the electronics unit.
(15) The mining truck of Aspect (14), wherein the one or more heat exchangers is positioned above the air transfer zone, such that the air transfer zone is enclosed by the resistor grid, the electronics unit, the deck, and a base support member of the one or more heat exchangers.
(16) The mining truck of any one of Aspects (14)-(15), further including an insultation layer disposed between the air transfer zone and the one or more heat exchangers.
(17) The mining truck of any one of Aspects (14)-(16), wherein the one or more heat exchangers is positioned above the electronics unit.
(18) The mining truck of Aspect (13), wherein the one or more electronics components of the mining truck includes a battery of the mining truck and an electronics unit positioned on the deck.
(19) The mining truck of Aspect (18), wherein the one or more heat exchangers includes a first heat exchanger configured to cool the battery of the mining truck and a second heat exchanger configured to cool the electronics unit.
(20) The mining truck of any one of Aspects (18-19), further including a radiator configured to cool the electronics unit, wherein the one or more heat exchangers is configured to cool the battery of the mining truck.

## Claims

1. A mining truck comprising:
a chassis extending along a longitudinal length of the mining truck, the chassis having a front end portion and a rear end portion;
a deck supported by the front end portion of the chassis;
a resistor grid supported by the deck;
an electronics unit supported by the deck and spaced apart from the resistor grid; and
an air transfer zone arranged between the resistor grid and the electronics unit, the air transfer zone configured to receive exhaust air from the resistor grid.

2. The mining truck of claim 1, wherein the electronics unit includes a battery.

3. The mining truck of either of claim 1 or 2, further comprising an insulation layer disposed between the air transfer zone and the electronics unit.

4. The mining truck of any preceding claim, wherein the resistor grid is configured to move the exhaust air in a first direction, and
wherein the air transfer zone forms a flow path in a second direction that is substantially perpendicular to the first direction.

5. The mining truck of claim 4, wherein the resistor grid includes one or more fins oriented to direct the exhaust air toward the second direction.

6. The mining truck of claim 4 or 5, wherein the air transfer zone is configured to vent the exhaust air in the second direction.

7. The mining truck of claim 6, wherein the deck has a first side and a second side opposite the first side, the second side including an operator cab of the mining truck, the first side including the air transfer zone,
wherein the air transfer zone is configured to vent the exhaust air away from the mining truck from the first side, and
wherein the second direction extends from the first side to an ambient area adjacent the first side.

8. The mining truck of claim 7, further comprising:
a mirror coupled to the first side of the mining truck; and
a line-of-sight defined between the mirror and the operator cab;
wherein neither of the resistor grid nor the electronics unit intersect the line-of-sight defined between the mirror and the operator cab.

9. The mining truck of any preceding claim, wherein the electronics unit comprises one or more DC/DC converters.

10. The mining truck of any preceding claim, wherein the resistor grid comprises a top-side access panel and wherein the mining truck preferably further comprises one or more condenser tubes positioned above the resistor grid.

11. The mining truck of any preceding claim, further comprising a front support member positioned between the resistor grid and the air transfer zone, and
wherein the front support member includes an upper portion and a lower portion, the upper portion removably attached to the lower portion.

12. The mining truck of any preceding claim, further comprising:
one or more heat exchangers positioned above the resistor grid, the one or more heat exchangers configured to receive a cooling fluid for cooling one or more electronic components of the mining truck.

13. The mining truck of claim 12, wherein the one or more heat exchangers are positioned above the air transfer zone, such that the air transfer zone is enclosed by the resistor grid, the electronics unit, the deck, and a base support member of the one or more heat exchangers and preferably wherein an insulation layer is disposed between the air transfer zone and the one or more heat exchangers.

14. The mining truck of either of claim 12 or 13, wherein the one or more heat exchangers are positioned above the electronics unit.

15. The mining truck of any of claims 12 to 14, wherein the one or more heat exchangers includes a first heat exchanger configured to cool the battery of the mining truck and a second heat exchanger configured to cool the electronics unit and wherein the mining truck preferably further comprises a radiator configured to cool the electronics unit, wherein the one or more heat exchangers are configured to cool the battery of the mining truck.
